# EUROPEAN PATENT APPLICATION

(11) **EP 0 540 791 A1**
(43) Date of publication of application: **12.05.1993**
(21) Application number: 91310234.9
(22) Date of filing: 05.11.1991
(51) Int. Cl.: F16B 12/52, F16B 12/50, A47B 47/05

(54) **Corner assembly for panel furniture**

(71) Applicant: THE STANLEY WORKS, New Britain, Connecticut 06050 (US)
(72) Inventor: Jacobs, Kenneth, Bramley, Surrey (GB)
(74) Representative: Hughes, Brian Patrick

(57) **Abstract**

A corner assembly (10) for furniture or other enclosures having solid wall panels (40) comprises horizontal and vertical support members (20, 60) secured by an interlocking corner block (80). The support members (20, 60) each include at least one groove for snugly receiving and concealing an edge of one of the panels (40), and a block channel (62, 64) for interlocking with tabs on the corner block. Such a block (80) secures to a block channel (62, 64) using a self-tapping screw (140, 144, 150) which passes through the tabs and engages a back wall (78) of the block channel opposite the mouth of the channel. The screw forces the block against shoulders at the mouth of the channel which prevent the block from coming out of the channel. The tip of the screw is pointed and pierces the back wall of the channel to form a shear connection which prevents the block from sliding along the length of the channel. The connection is thus in compression instead of tension. The tips of the screws are concealed by spaced-apart walls (28) of the support members or by interior faces of the panels (40).

## Description

This invention generally relates to assemblies for joining walls and edge structural members of furniture and other enclosures. The invention specifically relates to corner assemblies for structural members characterized by interlocking support members which support panels without fasteners and secured by an interlocking corner block affixed to the support members.

### Background of the Invention

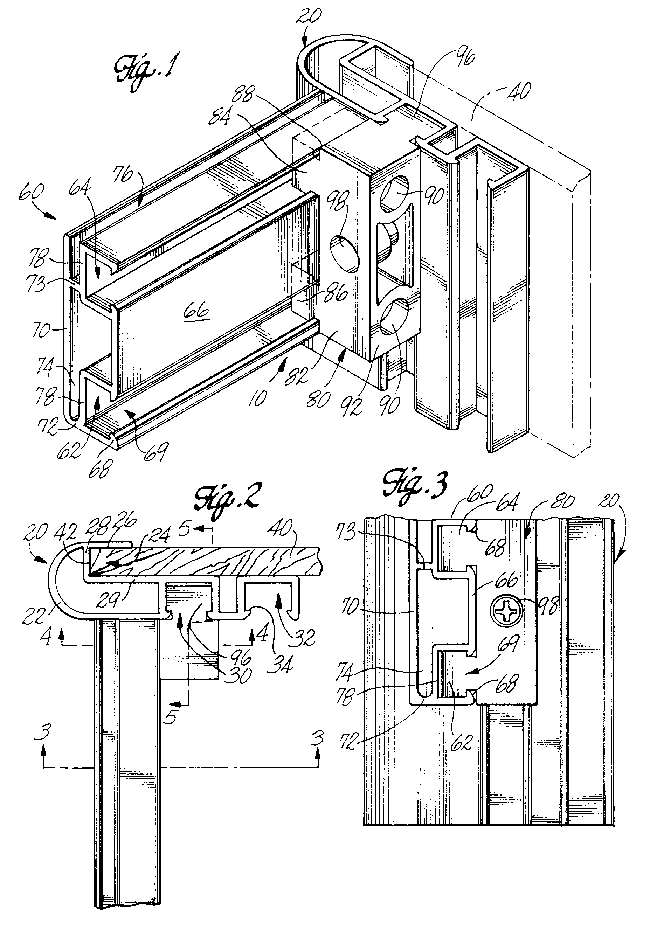

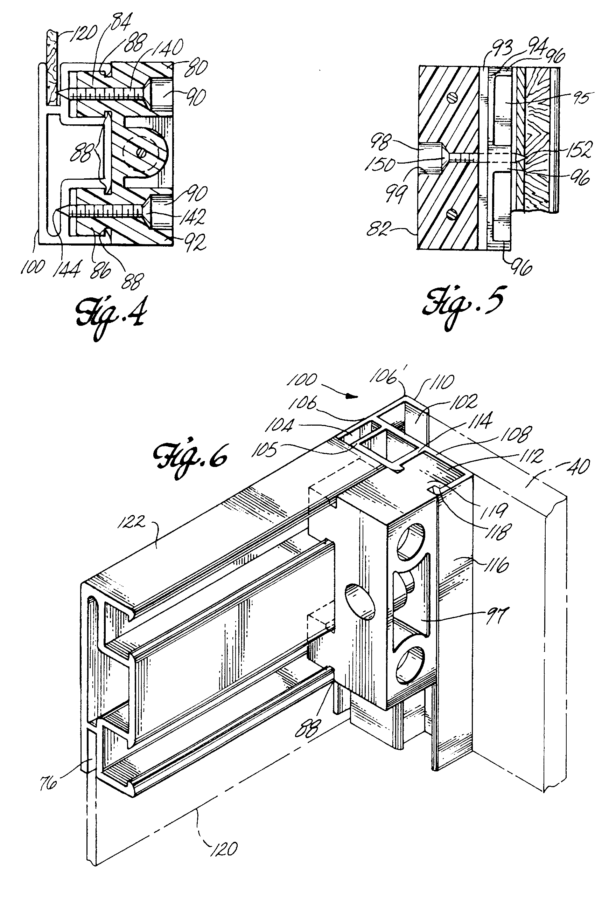

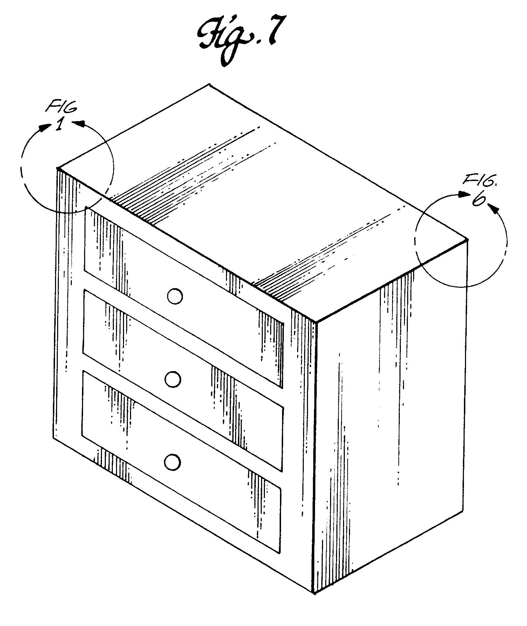

Corner connections of wall panels in furniture and other enclosures pose problems in mass-manufactured contemporary-style furniture. The corner should be rigid, strong, and inexpensive but also must be aesthetically appealing. To achieve both these goals, furniture designers have sought to develop corner connections which conceal the fasteners necessary to hold the wall panels together while providing adequate structural strength. For example, Chapman et al. U.S. Patent 3,150,903 discloses (in FIG. 3) a corner brace 70 held to wall panels 20 using screws and nuts in the panels. The brace protrudes into the interior space of the furniture and would be expensive to manufacture and install.

Gasner et al. U.S. Patent 3,525,560 discloses a corner element 84 for coupling frame members. The element slides into one member 80 and a dovetail protrusion 86 locks into the other frame member. The element is held with screws 88 which are visible after final assembly. Structural rigidity is provided only by the screws.

Biebuyck U.S. Patent 3,881,294 discloses a glass framing system including shear blocks 58 (FIG. 11) secured to horizontal and vertical frame members using screws. The blocks do not interlock to the frame, relying on the screws for structural strength.

Baus U.S. Patent 4,527,364 discloses a corner assembly for hollow walls in which a screw secures a corner member in the walls. The screw is hidden in the walls. Structural strength comes from placement of the corner member within the walls.

Thus, the prior art fails to provide means for securing corners of furniture or other enclosures, in which solid wall panels are interlocked in a rigid corner with concealed fasteners, and in which the panel edges are concealed and the panels are held without fasteners.

One feature of this invention is to provide a corner block which can interlock to support members of furniture and which can be secured with concealed fasteners. Another feature of the invention conceals edges of wall panels of the furniture in grooves in the support members. Yet another feature comprises support members provided with a wall for concealing tips of fasteners used to secure the assembly. An advantage of the invention is that predrilled holes are not needed in the edge members.

### Summary of Invention

A corner assembly for furniture or other enclosures having solid wall panels comprises horizontal and vertical support members secured by an interlocking corner block. The support members each include at least one groove for receiving and concealing an edge of one of the panels, and a block channel for interlocking with matching shoulders on the corner block. The block secures to each block channel using a threaded fastener which passes through the block and engage a wall of the block channel for urging the block against the shoulders. Preferably, the tip of the fastener pierces a wall of the channel for preventing movement of the block along the channel. The fasteners are concealed by spaced-apart walls of the support members or by interior faces of the panels.

The invention can also comprise a corner assembly having a support member and a block connected to the member by a fastener. The support member has a channel with a mouth narrower than the portion of the channel inward from the mouth, and the block has a portion with shoulders wider than the mouth of the channel fitted within the channel. The fastener is secured through a hole in the block transverse to the channel. A tip of the fastener engages the wall of the support member opposite the mouth for biasing the block toward the mouth of the channel.

### Brief Description of Drawings

FIG. 1 is an isometric view of a first embodiment of a corner assembly of the invention;
FIG. 2 is a top plan view of the assembly of FIG. 1;
FIG. 3 is a side sectional elevation of the assembly of FIG. 1;
FIG. 4 is a section view of a corner block used in a corner assembly;
FIG. 5 is a side section view of the corner block of FIGs. 1 and 4;
FIG. 6 is an isometric view of a second embodiment of the invention; and
FIG. 7 is a semi-schematic illustration of a chest of drawers indicating the locations of the corner assemblies of FIGs 1 and 6.

In the drawings cross hatching of cross sections of extruded aluminum edge members has been omitted to minimize possible confusion due an excess of lines.

### Detailed Description

In the following description of the preferred embodiments, specific terminology is used for clarity. The invention is not limited to the specific terms selected, but includes all technical equivalents functioning in a substantially similar manner to achieve a substantially similar result.

FIG. 1 shows a corner assembly 10 according to the invention which can be used to form one top front corner of an article of furniture such as a chest of drawers as illustrated in FIG. 7. FIG. 1 views the assembly from inside the article of furniture. A vertical support member or front leg 20 is secured to a side wall panel 40 of the furniture and to a cross member 60. The two support members 20 and 60 form edges of the furniture. The leg, panel, and cross member are held rigid by a corner block 80. The cross member is ordinarily assembled near the floor or at the top of the furniture so as to form a bottom or top edge of a front of the furniture. Preferably the leg and cross member comprise extruded aluminum or other formed, rigid material.

The panels comprise plywood or a composite product such as particle board. Plywood and particle board are desirable as inexpensive furniture materials. Their smooth, hard planar surfaces accept finishes well, but when cut their edges are rough, coarse-grained and unsightly. Therefore, as shown in FIG. 2, in cross-section the front leg comprises an arcuate front wall 22 to conceal the edge 42 of the wall panel and to provide an aesthetically clean appearance. A generally "C"-shaped groove 24 is provided rearward of the arcuate front wall to snugly receive the edge of the panel. The groove is defined by a side wall 26, an abutment wall 28, and a center wall 29. The side wall is tangent to and contiguous with the arcuate front wall.

The side wall serves to hold the panel and conceal its unsightly edge. If desired the side wall and opposite center wall can converge slightly for tightly engaging the opposite faces of the panel.

Formed contiguous with the center wall are plural block channels 30, 32, each of which is generally T-shaped. Inwardly protruding shoulders 34 are provided at the mouth of each block channel to retain in place matching tabs provided on the block. The shoulders thereby define a mouth of each block channel which is narrower than a portion of the channel inward from the mouth. The shoulders and mouth retain the block in the channel as discussed below.

The cross member 60 preferably has a cross-section profile as shown in FIG. 3. The cross member comprises two spaced-apart T-shaped block channels 62, 64 joined by an inside side wall 66. Each block channel has inwardly facing shoulders 68 to define a mouth 69 narrower than the channel for retaining a corner block in the channels. A rear wall 70 is secured by short lateral walls 72, 73 and is thereby spaced apart from the back walls 71 of the block channels. The rear wall and the channels thereby define a cavity 74 and a narrow "U"-shaped panel groove 76. The panel groove can receive a panel of the furniture (such as thin plywood or hardboard) which is held in place in the groove by being surrounded by grooves in the edge members of the furniture (without fasteners). Alternatively, when the assembly is used for furniture having a rear panel, such as a chest of drawers, the cross member is inverted so that the panel froove faces the floor (FIG. 6) for receiving an adge of a rear panel. The cross member forms a smooth front or rear horizontal edge for the furniture.

A corner block used to assemble the parts is shown in FIG. 4 which illustrates in cross section a cross member 100 at, for example, the lower back portion of a chest of drawers. A side wall panel 120 is slid into the U-shaped groove along the top of the edge member. No fasteners are needed to secure the panel in the groove. As indicated, T-shaped tabs 84, 86 on the block are interlocked with the block channels, and suitable fasteners 140, 142 (such as steel self-tapping screws) secure the tabs and block to the channels.

When the cross member is assembled as shown in FIG. 1, the fasteners can penetrate the rear walls 78 of the block channels and can protrude into the cavity inside the aluminum extrusion. Thus, the cavity and the rear wall conceal the tips of the screws when the assembly is complete.

The corner block is an injection molded plastic piece (such as ABS) having three pilot holes for receiving screws. The holes extend through T-shaped tabs 84,86 on adjacent sides of the block. The holes are smooth and self tapping screws are used so that threading of the holes is not required. Long pitch screws are preferred for ease of assembly. A sharp tip is desirable on the screw for reasons which will become apparent.

When a block is mounted in a T-shaped channel and a screw is threaded through the block, the point of the screw engages the back wall of the channel opposite the mouth. This forces the block away from the back wall and against the shoulders straddling the mouth of the channel. Thereafter the sharp point of the screw pierces the back wall of the channel, plastically deforming the adjacent aluminum. It is not necessary that the thread on the screw engage the back wall of the channel since the screw does not apply any tension load on the wall. In fact, the screw is loaded in compression between the block and the wall in contrast with the usual tension loading of screws used for assembling furniture.

This is advantageous since the long edges of the T-shaped tab or tabs engaging the shoulders inside the mouth of the channel keep the parts aligned with excellent precision. Furthermore, it is quite difficult to pull the corner connection apart since the assembly with screws in compression is actually pushing the connection apart to begin with. The tip of the screw piercing the back wall of the channel secures the block against movement along the length of the channel. The tip of the screw is loaded in shear to resist such movement. It has been shown that an exemplary connection using a screw tip piercing the back wall of a channel in an aluminum extrusion can resist more than 100 kg. load tending to make the block move along the channel.

It is not necessary for the sharp tip of the screw to penetrate all of the way through the back wall of the channel to secure the corner connection. Typically, however, the screw is made long enough that it barely penetrates the wall to obtain greater shear resistance. This leaves the generally conical part of the tip engaging the wall for good compression loading of the screw against the back wall. If the tip does penetrate clear through the wall it enters either a hidden pocket inside the aluminum extrusion or a groove in which a side panel is placed. In either case the tip and adjacent plastically deformed aluminum are hidden from view.

It may also be noted that it is not necessary for the screws to engage the side panels since these are held in place by grooves in the various edge members of the furniture. Since the grooves are fairly deep to hide the edges of the side panels, the edges of the panels not only need not be finished carefully, but may even be cut with relatively low accuracy and still fit well to form an article of furniture.

This arrangement is strong, rigid, aesthetically appealing and cost-efficient, since inexpensive materials such as extruded aluminum and particle board can be used to construct clean-looking, strong furniture with no visible fasteners.

The same general arrangement can be used to assemble the rear leg or rear corner of furniture by substituting the rear leg 100 of FIG. 6 for the front leg. The rear leg comprises extruded aluminum or other unitarily formed, rigid material. A side panel groove 102 and a rear panel groove 104 are each formed by a center wall 108 and a back wall 106 joined perpendicularly to the center wall. A short side wall 110 joined to a side edge 106' of the back wall defines the side panel groove. An interior wall 105, spaced apart from the back wall and joined at a right angle to the center wall, defines the rear panel groove. Spaced apart from both grooves is a T-shaped block channel 112, defined by a portion of the center wall, first and second interior walls 114, 116, and inwardly protruding shoulders 118. The shoulders define a mouth 119 which is narrower than the channel.

In use, the back leg provides means to hold a side panel and a rear panel in a perpendicular relationship. A side panel of an article of furniture can be slid into the side panel groove, and a rear panel 120 can be slid into the rear panel groove. The other edge of the rear panel fits into a groove 76 in a rear edge member 121. It may be noted that the rear edge member has the same transverse cross section as the front edge member 60 illustrated in FIG. 1. It is inverted as compared with the member in FIG. 1 so that the groove is in place to receive the rear panel of the furniture. The smooth face of the extrusion is downward on the front edge extrusion since it is adjacent the top of a drawer in the chest illustrated in FIG. 7.

Referring again to FIG. 6, the T-shaped tabs on a corner block are slid into the corner block channel 112 and secured to the center wall using self-tapping screws. The tips of the screws penetrate the center wall, biasing the block inward and forcing the block against shoulders at the mouth of the channels in the leg or cross member, firmly holding the leg and cross member together as described above.

A corner block for the assembly of FIGs. 1 and 6 is shown in all the drawings. The block can be made of injection molded ABS plastic or other suitable rigid material having relatively high shear strength. The block has a body 82 generally formed as a parallel piped.

On another face of the body are locking tabs 84, 86 each having a T-shaped cross section. The tabs join the body at shoulders 88 which are spaced apart wider than the mouth of the block channels of the legs and cross members. Each of the tabs has a hole 90 extending through the tab and the opposite face 92 of the body. The holes in the tabs enable a fastener to extend through the shoulders and tightly hold the body against one of the support members.

On another face of the body a locking bar 93 is formed, comprising a longitudinal ridge 94 and plural spaced-apart tabs 96 protruding therefrom. Those tabs are interconnected by a longitudinally extending web 95. The recesses adjacent the web and a recess 97 in another face of the block are merely for conserving material in the injection molding of the part. Each of the tabs 96 is generally shaped as a T to snugly interlock with the block channels in the support members. A fastener hole 98 is provided centrally located with respect to the tabs. The hole extends through the ridge and the body, terminating in a countersunk recess 99 in the opposite face of the body.

Extrusions with the same cross section as the front and rear cross members 60, 122 are also used as the spacers between drawers on the front of the chest, connected to the front leg in the same manner as the upper front corner assembly.

A number of blocks like those just descibed are positioned along the front and rear top cross members with sufficient screws making conventional tension connections to the top of the chest to hold it in place. Each such block has its T-shaped tabs on one face mounted in a channel in the front or rear top cross member with the other tabs extending downwardly and not engaging anything. Screws extend upwardly through the tabs and block into a flat plank to form the top surface of a chest of drawers. The compact construction of the corner block, combined with the interlocking tabs and edge members, results in an assembly which provides a rigid, square corner with high shear strength. The invention may be practiced in many ways other than as specifically disclosed herein. For example, the material from which the invention is fabricated can be different, as indicated above. The overall dimensions of the parts are non-critical provided that perpendicular interlocking of the corner block and the support members is maintained. The assembly can be adapted to all types of enclosures and different articles of furniture including chests, dressers, cabinets, etc. A compression type connection as described with a screw tip piercing a wall for resisting shear has many applications outside of furniture. Such a connection is particularly useful with aluminum extrusions where channels can be formed with a mouth narrower than the balance of the channel for receiving a tab or tabs on a block. The connection is particularly advantageous since it can be made at any arbitrary location along the length of a channel without any predrilled holes to receive a fastener.

The channels need not be in extrusions but may be in the form of more closed pockets in injection molded parts, for example. In such a case, the T-shaped tabs may be designed to elastically deform to snap into the pocket. Also, a T-shaped channel may be replaced with other shapes where the mouth of the channel is narrower than the part of the channel inwardly from the mouth so that a block or the like can be compression loaded toward the mouth of the channel.

Thus, the scope of the invention should be determined from the appended claims.

## Claims

1. A corner assembly having a support member and a block connected to the member, the assembly being characterized by:
a support member having a channel with a mouth narrower than the portion of the channel inward from the mouth;
a block having at least a portion fitted within the channel of the support member, that portion within the channel having a portion wider than the mouth of the channel, and a hole transverse to the channel; and
a threaded fastener secured through the hole in the block, the fastener having a tip engaging a wall of the channel in the support member opposite the mouth of the channel for biasing the block toward the mouth of the channel.

2. An assembly as recited in claim 1 wherein the tip of the fastener pierces the wall of the support member opposite the mouth by plastically deforming the wall.

3. An assembly as recited in either of claims 1 or 2 wherein the support member has a second wall opposite the mouth of the channel spaced apart from the first wall such that the tip of the fastener protrudes into the space between the walls.

4. An assembly as recited any of the preceding claims wherein channel has a generally T shape and the portion of the block in the channel has a generally T-shaped tabs cross section.

5. An assembly as recited in of any of the preceding claims wherein the structural member is characterized by at least one elongated groove for receiving and concealing an edge of a furniture panel.

6. An assembly as recited in of any of the preceding claims comprising:
a second support member perpendicular to the first support member and having a channel with a mouth narrower than the portion of the channel inward from the mouth;
the block having a portion fitted within the channel of the second support member, that portion within the channel having a portion wider than the mouth of the channel; and
a second threaded fastener secured through a hole in the block, the fastener having a tip engaging a wall of the channel in the second support member opposite the mouth of the channel for biasing the block toward the mouth of the channel, thereby securing the second support member to the first support member.

7. An assembly as recited in claim 6 wherein each structural member is characterized by at least one elongated groove for receiving and concealing an edge of a furniture panel, and further comprising a panel having edges inserted into the respective grooves for forming a furniture side wall.

8. A corner assembly for a furniture enclosure comprising a plurality of adjacent wall panels for forming walls of the enclosure, a plurality of elongated structural edge members for holding the panels and intersecting for forming a corner of the enclosure, and a corner block secured to the structural edge members, the corner assembly being characterized by:
the edge members each having an elongated groove for receiving an edge of one of the panels and concealing the edge of the panel, and each having an elongated locking channel;
a corner block secured to the edge members by a plurality of angularly separated locking tabs, each locking tab having a portion interlocked in one of the channels; and
a threaded fastener extending through the corner block and having an end engaging a wall opposite the mouth of the channel for forcing the block toward the mouth of the channel.

9. An assembly as recited in claim 8 wherein the tip of the fastener pierces the wall of the support member opposite the mouth of the channel by plastically deforming the wall for resisting movement along the length of the channel.

10. An assembly as recited in either of claims 8 or 9 wherein each support member has a second wall opposite the mouth of the channel spaced apart from the first wall such that the tip of the fastener protrudes into the space between the walls and the tip of the fastener is concealed by second wall or by a panel.

11. An article of furniture comprising a plurality of panels forming side walls of the article, and a plurality of elongated structural members along each edge of the panels concealing the edges of the panels and forming edges of the article of furniture, each of the corners of the article being secured by a corner assembly as recited in any of claims 8 to 10.
